# EUROPEAN PATENT SPECIFICATION

(11) **EP 1 652 054 B1**
(45) Date of publication and mention of the grant of the patent: **29.08.2007**
(21) Application number: 04779224.7
(22) Date of filing: 28.07.2004
(51) Int. Cl.: G06F 1/04

(54) **EVENT TIME-STAMPING**
EREIGNIS-ZEITSTEMPELUNG
HORODATAGE D'EVENEMENTS

(30) Priority: 07.08.2003 US 637301
(43) Date of publication of application: 03.05.2006
(73) Proprietor: INTEL CORPORATION, Santa Clara, CA 95052 (US)
(72) Inventor: LOUKIANOV, Dmitrii, Chandler, AZ 85226 (US)
(74) Representative: Goddar, Heinz J.
(86) International application number: PCT/US2004/024055
(87) International publication number: WO 2005/017724

(56) References cited:
- EP-A- 0 476 250
- EP-A- 0 903 655
- EP-A- 1 185 013
- US-A- 5 038 319
- US-A- 5 426 774
- US-A- 5 822 317
- US-A1- 2003 002 540

## Description

### BACKGROUND

Computing devices are evolving from general-purpose, non-real time number crunchers into real-time processing devices comprising main processors that perform digital processing tasks. In modem computing devices, a combination of factors such as, for example, cache memories, delayed interrupt handling, and shared resources, generally make processing time in these devices highly variable and unpredictable. For instance, the first pass through a typical program loop may take 10-50 times longer than subsequent passes through the same program loop due to cache fill cycles. However, conventional stream processing typically requires predictable and substantially non-variable processing times in order to achieve high quality results.

### BRIEF DESCRIPTION OF THE DRAWINGS

The disclosure US-A-5 822 317 describes a sender apparatus in a packet transmission apparatus supplying packets of data, each packet being affixed with a time stamp for establishing synchronization in operation between the sender and receiver.
One aspect of the invention is a system as defined in independent claim 1. Further aspects of the invention are a method and machine readable media as defined in independent claims 14 and 23, respectively. Other embodiments of the invention are specified in the respective appended dependent claims.

**.** The invention described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.

FIG. 1 illustrates an embodiment of a computing device comprising a time-stamping circuit.

FIG. 2 illustrates an embodiment of the time-stamping circuit of FIG. 1.

FIG. 3 illustrates an embodiment of a streaming system that comprises a server and the computing devices of FIG. 1.

FIG. 4 illustrates an embodiment of a method of processing a stream that may be implemented by the streaming system of FIG. 3.

### DETAILED DESCRIPTION

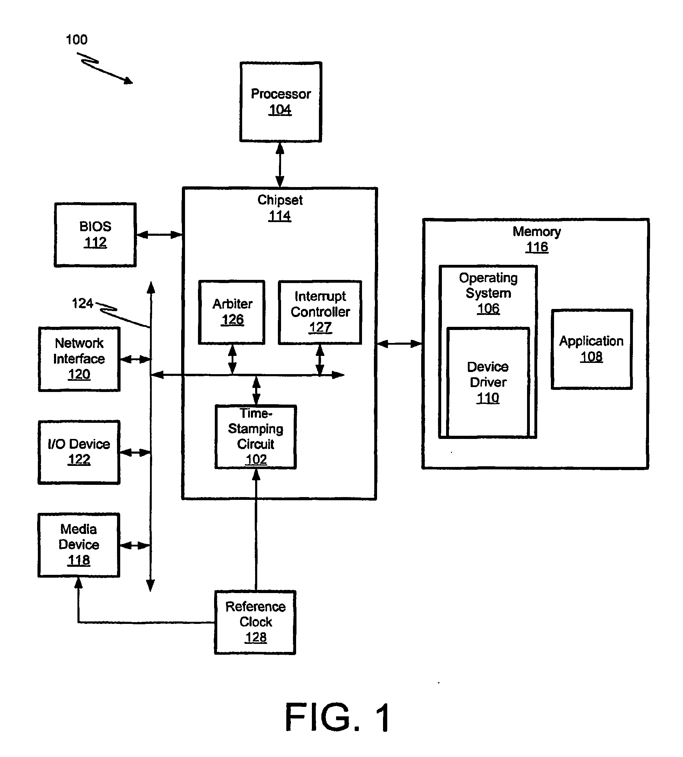

An embodiment of a computing device 100 comprising a time-stamping circuit 102 is shown in FIG. 1. As illustrated, the computing device 100 may comprise one or more processors 104. The processors 104 may perform actions in response to executing instructions of an operating system 106, application 108, a device driver 110, basic input/output system (BIOS) firmware 112, and/or some other software or firmware module.

The computing device 100 may further comprise a chipset 114 that is coupled to the processors 104 via a processor bus. The chipset 114 may comprise one or more integrated circuit packages or chips that couple the processors 104 to other components of the computing device 100 such as memory 116. The memory 116 may comprise memory devices (not shown) having addressable storage locations that may be read from and/or written to. The memory devices may comprise one or more volatile memory types such as, for example, RAM (random access memory) devices, SRAM (static RAM) devices, DRAM (dynamic RAM) devices, SDRAM (synchronous DRAM) devices, DDR (double data rate) SDRAM devices, etc. The memory devices may further comprise one or more non-volatile memory types such as, for example, Flash memory devices, ROM (read only memory) devices, PROM (programmable read only memory) devices, EPROM (erasable PROM) devices, EEPROM (electrically erasable PROM) devices, Ferroelectric memory devices, battery-backed memory devices, etc.

The chipset 114 may further couple the processors 104 to the BIOS firmware 112. The BIOS firmware may comprise routines which the computing device 100 may execute during system startup in order to initialize the processors 104, chipset 114, and other components of the computing device 100. Moreover, the BIOS firmware 112 may comprise routines or drivers which the computing device 100 may execute to communicate with one or more components of the computing device 100.

The chipset 114 may further couple the processors 104 to one or more media devices 118, network interfaces 120, and/or other I/O devices 122 via one or more buses 124. The media devices may comprise audio/video playback devices, audio/video capture devices, audio/video transport devices, etc. The network interfaces 120 may comprise LAN (local area network) controllers, modems, and/or wireless network controllers that provide the computing device 100 with communication links to other computing devices, servers, and/or other network-enabled devices. Further, the I/O devices 122 may comprise mice, keyboards, video controllers, hard disk drives, floppy disk drives, etc.

As depicted, a bus 124 may be shared among one or more media devices 118, network interfaces 120, and/or I/O devices 122. Accordingly, the computing device 100 may comprise an arbitration scheme to allocate access to the shared bus 124. In one embodiment, the computing device 100 may comprise an arbiter 126 that receives request signals or messages from the devices 118, 120, 122 sharing the bus and that generates grant signals or messages to grant one of the requesting devices 118, 120, 122 access to or ownership of the shared bus 124. As depicted, the chipset 114 may include the arbiter 126 for the shared bus 124. However, in other embodiments, the arbiter 126 may be external to the chipset 114. Further, the computing device 100 may be implemented without a central arbiter 126 for the shared bus 124. In such an embodiment, the devices 118, 120, 122 may generate signals that result in the devices 118, 120, 122 arbitrating among themselves to obtain ownership of the shared bus 124.

Further, the chipset 114 may comprise an interrupt controller 127 to receive interrupt events (e.g. signals, messages) from the devices 118, 120, 122 and to deliver the interrupt events to the processor 104 for processing. In particular, the interrupt controller 127 may detect the occurrence of one or more interrupt events and may deliver the detected interrupt events to the processor 104 in an order that is based upon a priority associated with each of the detected interrupt events.

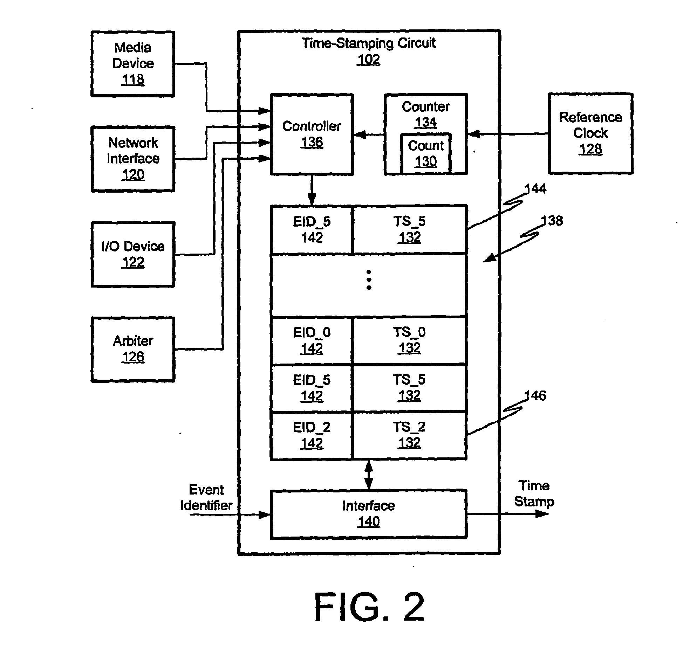

Referring now to FIGS. 1 and 2, the chipset 114 may further comprise the event time-stamping circuit 102; however, in other embodiments, the time stamping circuit may be incorporated into the arbiter 126, into the interrupt controller 127, or into a component separate from the chipset 114. The time-stamping circuit 102 may receive a reference clock signal from a reference clock 128, and may periodically update a local count 130 in response to the reference clock signal. The time-stamping circuit 102 may further stamp events with a time stamp 132 that is based upon the local count 130. A requester (e.g. a processor 104) may later request the time stamp 132 for the event from the time-stamping circuit 102 in order to obtain a relatively accurate indication of when the event occurred. By placing the time-stamping circuit 102 near sources (e.g. devices 118, 120, 122, and arbiter 126) of the events, little delay may be introduced between when the event occurred and when the event is detected and stamped by the time-stamping circuit 102. Further, the fewer components and shared resources between the sources of the events and the time-stamping circuit 102, the less the introduced delay may vary between events. According, computing devices 100 may be implemented in which processors 104 may determine very accurate time differences between the occurrence of two or more events.

As depicted in FIG. 2, the time-stamping circuit 102 may comprise a counter 134, a controller 136, an event store 138, and an interface 140. The counter 134 may be coupled to the reference clock 128 to receive a reference clock signal having a reference frequency such as, for example, 27 MHz. Further, the counter 134 may be implemented as a 32-bit roll over counter that may update its count 130 in response to each cycle of the reference clock signal.

The controller 136 may receive events such as, for example, interrupt request signals, interrupt request messages, arbitration grant signals, etc. from the media devices 118, network interfaces 120, 1/0 devices 122, and/or arbiter 126. The controller 136 may further be programmed to stamp certain events of interest and to basically ignore other events. For example, the controller 136 may be programmed or otherwise configured to stamp the first arbitration grant signal following an interrupt request from an audio interface of the media devices 118. Similarly, a media device 118 may be assigned to generate interrupt requests on a particular interrupt line (e.g. interrupt signal line INT_5), and the controller 136 may be programmed or otherwise configured to stamp all interrupt requests received on the interrupt line assigned to the media device 118.

In response to detecting an event of interest, the controller 136 may store a time stamp 132 for the detected event in the event store 138. In one embodiment, the controller 136 may simply store the current count 130 of the counter 134 as the time stamp 132 for the detected event. In another embodiment, the controller 136 may generate the time stamp 132 based upon the count 130 of the counter 134. For example, the controller 136 may generate the time stamp 132 by encoding the count 130 such that the time stamp 132 includes fewer bits than the count 130 and/or by placing the time stamp 132 in a form suitable for or expected by a requester (e.g. a processor 104).

In response to detecting an event of interest, the controller 136 may further store an event identifier 142 with the time stamp 132 in the event store 138. The event identifier 142 may indicate a source (e.g. a particular media device 118) or type (e.g. interrupt signal INT_5 or arbitration grant GNT_1) of the event. The event identifier 142 may be used to retrieve the time stamp 132 for a particular event from the event store 138. In one embodiment, the event store 138 may store multiple events and multiple events of the same type. The event store 138 may further retrieve stored time stamps 132 in a first in first out (FIFO) order based upon event identifier 142.

In one embodiment, the event store 138 may be implemented as a single tagged FIFO queue-like structure as illustrated in FIG. 2. The controller 136 in such an embodiment may push event identifiers 142 and associated time stamps 132 into the tail 144 of the FIFO structure as the events are detected. The interface 140 may later request the FIFO structure for the time stamp 132 of an event identifier 142. In response to the request, the FIFO structure may provide the interface 140 with a time stamp 132 having the associated event identifier 142. If the FIFO structure has multiple time stamps 132 with the associated event identifier 142, then the FIFO structure returns the one that is closest to the head 146 of the FIFO structure.

For example, FIG. 2 shows the FIFO structure after the controller 136 pushed several events having event identifiers 142 of EID_0, EID_2, and EtD_5 and their associated time stamps 132 into the tail 144 of the FIFO structure. In response to a request for the time stamp 132 associated with the event identifier EID_0, the FIFO structure may return the time stamp TS_0 associated with the oldest event identifier EID_0 by returning the time stamp TS_0 that is closest to the head 146 of the FIFO structure. Similarly, in response to a request for the time stamp 132 associated with the event identifier EID_5, the FIFO structure may return the time stamp TS_5 associated with the oldest event identifier EID_0 by returning the time stamp TS_5 that is closest to the head 146 of the FIFO structure.

The event store 138, however, may be implemented using other storage structures. For example, the event store 138 may comprise a separate FIFO structure for each supported event type/source and the controller 136 may push time stamps 132 into the appropriate FIFO structure. In such an embodiment, event identifiers 142 may not be stored in the event store 138 since time stamps 132 may be simply pulled from the head 146 of the appropriate FIFO structure. It should also be appreciated that the FIFO structures may be implemented in various manners. For example, the FIFO structures may be implemented as ring buffers with head and tail pointers to track the head 146 and tail 144 of each FIFO structure.

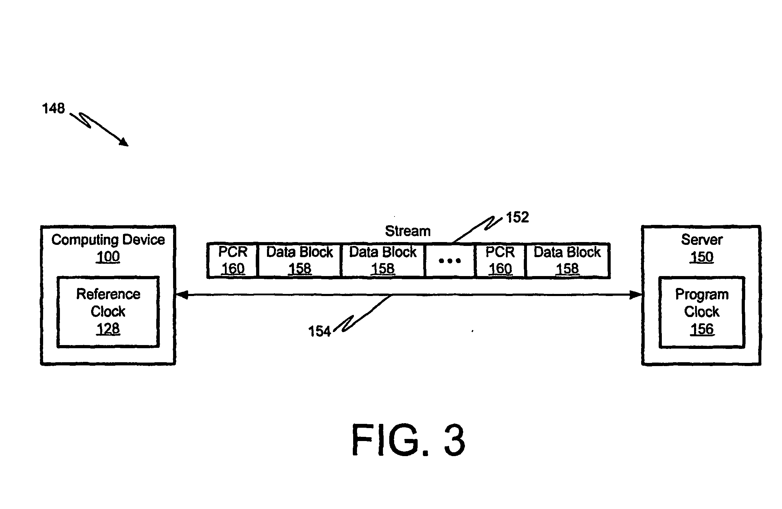

Referring now to FIG. 3, an embodiment of a streaming system 148 is shown. As depicted, the streaming system 148 may comprise a server 150 to transmit streams 152 such as, for example, audio streams, video streams, audio/video streams, data streams, etc. to the computing device 100 via a network 154. As depicted, the server 150 may comprise a program clock 156 that generates a program clock signal having a PCR (program clock rate). In response to the program clock signal, the server 150 may transmit the stream 152 at the PCR of the program clock 156. In one embodiment, the server 150 may transmit the stream 152 as a sequence of data blocks 158 with interspersed PCR stamps 160 generated from the program clock 156. The PCR stamps 160 generally provide a reference time base for playback or processing of the stream 152.

The one or more processors 104 of the computing device 100 may prepare the data blocks 158 of the received stream 152 to place the data blocks 158 in a form suitable for processing by a media device 118. The processors 104 may then cause the prepared data blocks 158 to be transferred to a media device 118 (e.g. an audio codec) for processing. The media device 118 may convert the data blocks 158 to audio samples and/or video frames and may playback and/or process the audio samples and/or video frames at a processing rate that is based upon the reference clock 128 of the computing device 100.

Ideally, the frequency of the reference clock 128 and the frequency of the program clock 156 would match. In which case, the media device 118 may stay in synchronization with the server 150 by simply processing the data blocks 158 at a processing rate set by the reference clock 128. However, in practice, the frequency of the reference clock 128 and the frequency of the program clock 156 do not match exactly. As a result, unless corrective action is taken, an over-run or an under-run condition will likely occur thus introducing artifacts into the playback or processing of the stream 152. In particular, if the program clock 156 is faster than the reference clock 128, buffers of the computing device 100 will likely over-run as a result of receiving data blocks 158 at a rate that is faster than they are being processed. Similarly, if the program clock 156 is slower than the reference clock 128, one or more buffers of the computing device 100 will likely under-run as a result of receiving data blocks 158 at a rate that is slower than they are being processed.

In one embodiment, the media device 118 may generate an interrupt signal each time the media device 118 is ready to receive more data blocks 158 for processing. In such an embodiment, the interrupt signals may accurately reflect the actual processing rate of the media device 118. Accordingly, if the processor 104 may accurately determine the times at which such interrupt signals are generated, the processor 104 may accurately determine the actual processing rate of the media device 118. To enable the processor 104 to accurately determine the times of such interrupt signals, the time-stamping circuit 102 may detect and stamp such interrupt signals without appreciable latency and/or latency variance between event occurrence and event stamping.

In another embodiment, the arbiter 126 may generate a grant signal that grants the media device 118 access to bus 124 each time data blocks 158 are transferred to the media device 118 for processing. Such arbitration signals may accurately reflect the actual processing rate of the media device 118. Again, if the processor 104 may accurately determine the times at which such grant signals are generated, the processor 104 may accurately determine the actual processing rate of the media device 118. To enable the processor 104 to accurately determine the times of such grant signals, the time-stamping circuit 102 may detect and stamp such grant signals without appreciable latency and/or latency variance between generation of the detected grant signal and the stamping of the detected grant signal. It should be appreciated, however, that other events may also accurately reflect the processing rate of the media device 118. Accordingly, the time-stamping circuit 102 may be configured to stamp these other events so that the occurrence times of these events may be accurately determined.

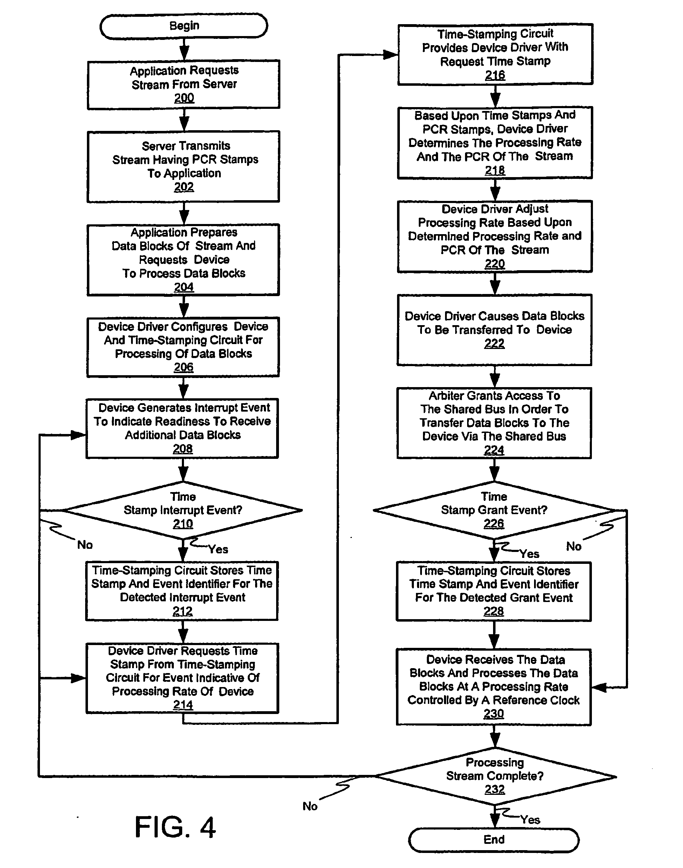

An embodiment of a stream processing method is shown in FIG. 4. An application 108 such as, for example, an MP3 (MPEG audio layer 3) player or a QuickTime™ Movie player in block 200 may request a stream 152 from the server 150. In block 202, the server 150 may transmit to the application 108 the requested stream 152 with PCR stamps 160 that are based upon the program clock 156 of the server 150. The application 108 in block 204 may prepare the data blocks 158 of the received stream 152 for processing and may request a media device 118 to process the prepared data blocks 158. In one embodiment, the application 108 may remove transport headers of the stream 152 and may store the data blocks 158 of the stream 152 in the memory 116. Further, the application 104 may request the media device 118 to play the data blocks 158 stored in the memory 116.

In response to the application 108 requesting the media device 118 to process one or more data blocks 158, a device driver 110 for the media device 118 in block 206 may configure the media device 118 for processing of the stream 152 and may configure the time-stamping circuit 102 for stamping of events indicative of the processing rate of the media device 118. In one embodiment, the device driver 110 may program the time-stamping circuit 102 to stamp interrupt signals that are generated by the media device 118 when the media device 118 is ready to process more data blocks 158. In another embodiment, the device driver 110 may program the time-stamping circuit 102 to stamp grant signals that are generated by the arbiter 126 prior to data blocks 158 being transferred to the media device 118 via the shared bus 124.

The media device 118 in block 208 may generate an interrupt event (e.g. interrupt signal INT_5) when the media device 118 is ready to receive one or more data blocks 158 of the stream 152. The controller 136 of the time-stamping circuit 102 in block 210 may determine whether to time stamp the interrupt event. In one embodiment, the controller 136 may determine whether the detected interrupt event is an event of interest that the controller 136 has been programmed to time stamp. In response to determining to time stamp the interrupt event, the controller 136 may store a time stamp 132 and an event identifier 142 for the event in the event store 138 (block 212).

In response to the interrupt event, the device driver 110 for the media device 118 in block 214 may request from the time-stamping circuit 102 a time stamp 132 for an event indicative of the processing rate of the media device 118. In one embodiment, the device driver 110 may provide the interface 140 with an event identifier 142 for such an event (e.g. interrupt signal and/or arbitration signal). The time-stamping circuit 102 in block 216 may provide the device driver 110 with a time stamp from its event store 138 based upon the received event identifier 142.

The device driver 110 in block 218 may determine the processing rate of the media device 118 based upon the received time stamp 132 and may determine the PCR of the stream 152 based upon the PCR stamps 160 of the stream 152. In one embodiment, the device driver 110 may determine a processing rate based upon the received time stamp 132 and one or more previously received time stamps 132. Similarly, the device driver 110 may determine a PCR based upon a PCR stamp 160 and one/or more previously received PCR stamps 160. For example, the device driver 110 may determine a difference between the current time stamp 132 and a previously received time stamp 132 and may update a determined processing rate based upon the obtained difference. Similarly, the device driver 110 may determine a difference between a current PCR stamp 160 and a previously received PCR stamp 160 and may update a determined PCR based upon the obtained difference.

In block 220, the device driver 110 may adjust the processing rate of the media device 118 based upon the determined processing rate and PCR. In one embodiment, the device driver 110 may adjust the frequency of the reference clock 128 and/or may reconfigure the media device 118 to adjust its processing rate in relation to the frequency of the reference clock 128. In another embodiment, the device driver 110 and/or application 108 may resample one or more data blocks 158 of the stream 152 to substantially match the PCR of the resampled data blocks 158 to the processing rate of the media device 118. For example, the device driver 110 and/or application 108 may upsample one or more data blocks 158 if the processing rate of the media device 118 is faster than the PCR of the stream 152. Similarly, the device driver 110 and/or application 108 may downsample one or more data blocks 158 if the processing rate of the media device 118 is slower than the PCR of the stream 152.

In block 222, the device driver 110 may cause the chipset 114 and/or media device 118 to transfer data blocks 158 from the memory 116. In one embodiment, the device driver 110 may cause a DMA (direct memory access) engine of the chipset 114 or the media device 118 to transfer data blocks 158 from the memory 116 to the media device 118 for processing. In block 224, the chipset 114 and/or media device 118 may request ownership of the shared bus 124 for the media device 118 and the arbiter 126 224 may grant the requester 114, 118 ownership of the shared bus 124. The controller 136 of the time-stamping circuit 102 in block 226 may determine whether to time stamp the grant event. In one embodiment, the controller 136 may determine whether the detected grant event is an event of interest that the controller 136 has been programmed to time stamp. In response to determining to time stamp the grant event, the controller 136 may store a time stamp 132 and an event identifier 142 for the event in the event store 138 (block 228).

The media device 118 in block 230 may receive the data blocks 158 and may process the data blocks 158 at a processing rate controlled by the reference clock 128. In particular, the media device 118 may generate audio samples and/or video frames from the data blocks 158 and may playback the audio samples and/or video frames at a rate dictated by the reference clock 128. In block 232, the media device 118 may determine whether it has completed processing of the stream 152. If the media device 118 determines to process further data blocks 158 of the stream 152, then the media device 118 may return to block 208 in order to generate an interrupt signal that indicates that the media device 118 is ready to receive additional data blocks 158. Otherwise, the media device 118 may cease processing of the stream 152.

## Claims

1. A system comprising
a computing device (100) to receive at a program clock rate a stream (152) comprising data blocks (158) and program clock rate stamps (160) indicative of a reference time base for processing of said stream,
a reference clock (128) to generate a reference clock signal, **characterized by**
a device (118) to process the data blocks of the stream transferred by said computing device (100), at a processing rate set by the reference clock signal and to cause events indicative of the actual processing rate of said device, and
a time-stamping circuit (102) to detect the events indicative of the actual processing rate and to store time stamps for the events that are based upon the reference clock signal, in order to determine (220) the actual processing rate of said device and to adjust the processing rate of said device based on said actual processing rate and said program clock rate stamp.

2. The system of claim 1 wherein time-stamping circuit (102) detects the events indicative of the actual processing rate based upon event types programmed into the time-stamping circuit (102).

3. The system of claim 1 further comprising a processor (104) to request the time-stamping circuit (102) for the time stamps for the events indicative of the actual processing rate.

4. The system of claim 3 wherein the processor (104) adjusts the processing rate based upon the time stamps for the events and the program clock rate stamps of the stream (152).

5. The system of claim 3 wherein the processor (104) adjusts a frequency of the reference clock signal based upon the time stamps for the events and the program clock rate stamps (160) of the stream (152).

6. The system of claim 3 wherein the processor (104) resamples the data blocks (158) based upon the time stamps for the events and the program clock rate stamps (160) of the stream (152).

7. The system of claim 3 wherein the time-stamping circuit (102) stores time stamps of detected events and provides the processor (104) with a stored time stamp for a detected event in response to the processor (104) requesting a time stamp from the time-stamping circuit (102).

8. The system of claim 3 wherein the time-stamping circuit (102) stores time stamps of detected events and provides the processor (104) with a stored time stamp of a detected event in response to the processor (104) providing the time-stamping circuit (102) with an event identifier for the detected event.

9. The system of claim 1 wherein the time-stamping circuit (102) stores a time stamp for a detected event in response to determining that the detected event is of an event type to be time stamped.

10. The system of claim 9 wherein the time-stamping circuit (102) ignores a detected event without storing a time stamp for the detected event in response to determining that the detected event is not of an event type to be time stamped.

11. The system of claim 3 further comprising a chipset (114) that comprises the time-stamping circuit (102) and that couples the processor (104) to a network interface (120) and the device (118).

12. The system of claim 1 further comprising an arbiter (126) that comprises the time-stamping circuit (102) and that arbitrates requests for a shared resource, wherein the time-stamping circuit stores time stamps for detected arbitration signals of an event type.

13. The system of claim 1 further comprising an interrupt controller (127) that comprises the time-stamping circuit (102) and that process interrupts received from the device, wherein the time-stamping circuit stores time stamps for detected interrupt signals of an event type.

14. A method comprising:
receiving (202) by a computing device (100) at a program clock rate a stream comprising data blocks and program clock rate stamps indicative of a reference time base for processing of said stream
generating a reference clock signal, **characterized by** the steps of
processing (206) by a device (118) the data blocks of the stream transferred by said computing device (100), at a processing rate set by the reference clock signal,
detecting (210) events caused by said device, the events being indicative of the actual processing rate, and
stamping the events indicative of the actual processing rate and storing (212) the time stamps for the events by a time stamping circuit (102) in order to determine (220) the actual processing rate of said device and to adjust the processing rate of said device based on said actual processing rate and said program clock rate stamp.

15. The method of claim 14 wherein detecting the events indicative of the processing rate is performed by a time-stamping circuit based upon event types programmed into the time-stamping circuit.

16. The method of claim 15 further comprising requesting (214) the time-stamping circuit for the time stamps for the events indicative of the actual processing rate.

17. The method of claim 14 further comprising adjusting (220) the processing rate based upon the time stamps for the events and the program clock rate stamps of the stream.

18. The method of claim 14 further comprising adjusting a frequency of the reference clock signal based upon the time stamps for the events and the program clock rate stamps of the stream.

19. The method of claim 14 further comprising resampling the data blocks based upon the time stamps for the events and the program clock rate stamps of the stream.

20. The method of claim 16 further comprising providing (216) a stored time stamp for a detected event in response to a request for a time stamp.

21. The method of claim 16 further comprising providing a stored time stamp of a detected event in response to a provided event identifier for the detected event.

22. The method of claim 15 wherein a time stamp is stored for a detected event in response to determining that the detected event is of an event type to be time stamped.

23. A machine-readable media comprising a plurality of instructions which when run on a computer platform causes said computer platform to carry out the method of claim 14.

24. The machine-readable medium of claim 23 wherein detecting the events indicative of the actual processing rate is performed by a time-stamping circuit based upon event types programmed into the time-stamping circuit.

25. The machine-readable medium of claim 24 further comprising requesting (214) the time-stamping circuit for the time stamps for the events indicative of the actual processing rate.

26. The machine-readable medium of claim 23 further comprising adjusting (220) the processing rate based upon the time stamps for the events and the program clock rate stamps of the stream.

27. The machine-readable medium of claim 23 further comprising adjusting a frequency of the reference clock signal based upon the time stamps for the events and the program clock rate stamps of the stream.

28. The machine-readable medium of claim 23 further comprising resampling the data blocks based upon the time stamps for the events and the program clock rate stamps of the stream.

29. The machine-readable medium of claim 25 further comprising providing (216) a stored time stamp for a detected event in response to a request for a time stamp.

30. The machine-readable medium of claim 25 further comprising providing a stored time stamp of a detected event in response to a provided event identifier for the detected event.

31. The machine-readable medium of claim 24 wherein a time stamp is stored for a detected event in response to determining that the detected event is of an event type to be time stamped.

## Patentansprüche

1. System, das umfaßt
Berechnungsvorrichtung (100) zum Empfangen eines Stroms (152) bei Programmtaktrate, umfassend Datenblöcke (158) und Programmtaktratenstempel (160), welche eine Bezugszeitbasis zum Verarbeiten des Stroms, einen Bezugstakt (128) zum Erzeugen eines Bezugstaktsignals angeben, **gekennzeichnet durch** eine Vorrichtung (118) zum Verarbeiten der Datenblöcke des durch die Berechnungsvorrichtung (100) übertragenen Stroms bei einer Verarbeitungsrate, die **durch** das Bezugstaktsignal eingestellt wird, und um Ereignisse zu bewirken, die die aktuelle Verarbeitungsfrequenz der Vorrichtung angeben, und eine Zeitstempelungsschaltung (102) zum Erfassen der die aktuelle Verarbeitungsrate angebenden Ereignisse und zum Speichern von Zeitstempeln für die Ereignisse, die auf dem Bezugstaktsignal basieren, um die aktuelle Verarbeitungsrate der Vorrichtung zu bestimmen (220) und die Verarbeitungsrate basierend auf der aktuellen Verarbeitungsrate und dem Programmtaktratenstempel anzupassen.

2. System nach Anspruch 1, wobei die Zeitstempelungsschaltung (102) die die aktuelle Verarbeitungsrate angebenden Ereignisse basierend auf in die Zeitstempelungsschaltung (102) programmierte Ereignisarten erfaßt.

3. System nach Anspruch 1, ferner umfassend einen Prozessor (104), um die Zeitstempelungsschaltung (102) für die Zeitstempel der die aktuelle Verarbeitungsrate angebenden Ereignisse anzufordern.

4. System nach Anspruch 3, wobei der Prozessor (104) die Verarbeitungsrate basierend auf den Zeitstempeln für die Ereignisse und der Programmtaktratenstempel des Stroms (152) anpaßt.

5. System nach Anspruch 3, wobei der Prozessor (104) eine Frequenz des Bezugstaktsignals basierend auf den Zeitstempeln für die Ereignisse und den Programmtaktratenstempeln (160) des Stroms (152) anpaßt.

6. System nach Anspruch 3, wobei der Prozessor (104) die Datenblöcke (158) basierend auf den Zeitstempeln für die Ereignisse und die Programmtaktratenstempel (160) des Stroms (152) erneut abtastet.

7. System nach Anspruch 3, wobei die Zeitstempelungsschaltung (102) Zeitstempel erfaßter Ereignisse speichert und dem Prozessor (104) einen gespeicherten Zeitstempel für ein erfaßtes Ereignis in Reaktion darauf bereitstellt, daß der Prozessor (104) einen Zeitstempel von der Zeitstempelungsschaltung (102) anfordert.

8. System nach Anspruch 3, wobei die Zeitstempelungsschaltung (102) Zeitstempel erfaßter Ereignisse speichert und dem Prozessor (104) einen gespeicherten Zeitstempel für ein erfaßtes Ereignis in Reaktion darauf bereitstellt, daß der Prozessor (104) der Zeitstempelungsschaltung (102) eine Ereigniskennung für das erfaßte Ereignis bereitstellt.

9. System nach Anspruch 1, wobei die Zeitstempelungsschaltung (102) einen Zeitstempel für ein erfaßtes Ereignis in Reaktion auf eine Bestimmung speichert, daß es sich bei dem erfaßten Ereignis um eine mit Zeitstempel zu versehende Ereignisart handelt.

10. System nach Anspruch 9, wobei die Zeitstempelungsschaltung (102) ein erfaßtes Ereignis in Reaktion auf eine Bestimmung, daß es sich bei dem erfaßten Ereignis nicht um ein mit Zeitstempel zu versehendes Ereignis handelt, ignoriert, ohne einen Zeitstempel für das erfaßte Ereignis zu speichern.

11. System nach Anspruch 3, ferner umfassend einen Chipset (114), der die Zeitstempelungsschaltung (102) umfaßt und den Prozessor (104) mit einer Netzwerkschnittstelle (120) und der Vorrichtung (118) koppelt.

12. System nach Anspruch 1, ferner umfassend einen Vermittler (126), der die Zeitstempelungsschaltung (102) umfaßt und Anforderungen für eine gemeinsame Ressource vermittelt, wobei die Zeitstempelungsschaltung die Zeitstempel für erfaßte Vermittlungssignale einer Ereignisart speichert.

13. System nach Anspruch 1, ferner umfassend eine Unterbrechungssteuerung (127), die die Zeitstempelungsschaltung (102) umfaßt und von der Vorrichtung empfangene Unterbrechungen verarbeitet, wobei die Zeitstempelungsschaltung Zeitstempel für erfaßte Unterbrechungssignale einer Ereignisart speichert.

14. Verfahren, das umfaßt:
Empfangen (202) durch eine Berechnungsvorrichtung (100) bei einer Programmtaktrate eines Stroms, umfassend Datenblöcke und Programmtaktratenstempel, die eine Bezugszeitbasis zum Verarbeiten des Stroms, angeben,
Erzeugen eines Bezugstaktsignals, **gekennzeichnet durch** die folgenden Schritte:
Verarbeiten (206) **durch** eine Vorrichtung (118) der Datenblöcke des **durch** die Berechnungsvorrichtung (100) übertragenen Stroms bei einer **durch** das Bezugstaktsignal eingestellten Verarbeitungsrate;
Erfassen (210) von **durch** die Vorrichtung bewirkten Ereignissen, die die aktuelle Verarbeitungsrate angeben, und
Stempeln der die aktuelle Verarbeitungsrate angebenden Ereignisse und Speichern (212) der Zeitstempel für die Ereignisse **durch** eine Zeitstempelungsvorrichtung (102);
um die aktuelle Verarbeitungsrate der Vorrichtung zu bestimmen (220) und die Verarbeitungsrate basierend auf der aktuellen Verarbeitungsrate und dem Programmtaktratenstempel anzupassen.

15. Verfahren nach Anspruch 14, wobei das Erfassen der die Verarbeitungsrate angebenden Ereignisse basierend auf in die Zeitstempelungsschaltung programmierte Ereignisarten durch eine Zeitstempelungsschaltung erfolgt.

16. Verfahren nach Anspruch 15, ferner umfassend das Anfordern (214) der Zeitstempelungsschaltung für die Zeitstempel für die die aktuelle Verarbeitungsrate angebenden Ereignisse.

17. Verfahren nach Anspruch 14, ferner umfassend das Anpassen (220) der Verarbeitungsrate basierend auf den Zeitstempeln für die Ereignisse und den Programmtaktratenstempeln des Stroms.

18. Verfahren nach Anspruch 14, ferner umfassend das Anpassen einer Frequenz des Bezugstaktsignals basierend auf den Zeitstempeln für die Ereignisse und den Programmtaktratenstempeln des Stroms.

19. Verfahren nach Anspruch 14, ferner umfassend das erneute Abtasten der Datenblöcke basierend auf den Zeitstempeln für die Ereignisse und den Programmtaktratenstempeln des Stroms.

20. Verfahren nach Anspruch 16, ferner umfassend das Bereitstellen (216) eines gespeicherten Zeitstempels für ein erfaßtes Ereignis in Reaktion auf eine Anforderung nach einem Zeitstempel.

21. Verfahren nach Anspruch 16, ferner umfassend das Bereitstellen eines gespeicherten Zeitstempels für ein erfaßtes Ereignis in Reaktion auf eine bereitgestellte Ereigniskennung für das erfaßte Ereignis.

22. Verfahren nach Anspruch 15, wobei ein Zeitstempel für ein erfaßtes Ereignis in Reaktion auf eine Bestimmung gespeichert wird, daß es sich bei dem erfaßten Ereignis um eine mit Zeitstempel zu versehende Ereignisart handelt.

23. Maschinenlesbares Medium, umfassend eine Vielzahl von Anweisungen, die, wenn sie auf einer Rechenplattform ablaufen, bewirken, daß die Rechenplattform das Verfahren gemäß Anspruch 14 ausführt.

24. Maschinenlesbares Medium nach Anspruch 23, wobei das Erfassen der die aktuelle Verarbeitungsrate angebenden Ereignisse durch eine Zeitstempelungsschaltung basierend auf in die Zeitstempelungsschaltung programmierten Ereignisarten erfolgt.

25. Maschinenlesbares Medium nach Anspruch 24, ferner umfassend das Anfordern (214) der Zeitstempelungsschaltung für die Zeitstempel der die aktuelle Verarbeitungsrate angebenden Ereignisse.

26. Maschinenlesbares Medium nach Anspruch 23, ferner umfassend das Anpassen (220) der Verarbeitungsrate basierend auf den Zeitstempeln für die Ereignisse und die Programmtaktratenstempel des Stroms.

27. Maschinenlesbares Medium nach Anspruch 23, ferner umfassend das Anpassen einer Frequenz des Bezugstaktsignals basierend auf den Zeitstempeln für die Ereignisse und den Programmtaktratenstempeln des Stroms.

28. Maschinenlesbares Medium nach Anspruch 23, ferner umfassend das erneute Abtasten der Datenblöcke basierend auf den Zeitstempeln für die Ereignisse und den Programmtaktratenstempeln des Stroms.

29. Maschinenlesbares Medium nach Anspruch 25, ferner umfassend das Bereitstellen (216) eines gespeicherten Zeitstempels für ein erfaßtes Ereignis in Reaktion auf eine Anforderung nach einem Zeitstempel.

30. Maschinenlesbares Medium nach Anspruch 25, ferner umfassend das Bereitstellen eines gespeicherten Zeitstempels eines erfaßten Ereignisses in Reaktion auf eine für das erfaßte Ereignis bereitgestellte Ereigniskennung.

31. Maschinenlesbares Medium nach Anspruch 24, wobei ein Zeitstempel für ein erfaßtes Ereignis in Reaktion auf eine Bestimmung, daß es sich bei dem erfaßten Ereignis um eine mit Zeitstempel zu versehende Ereignisart handelt, bereitgestellt wird.

## Revendications

1. Système comprenant :
un dispositif de traitement informatique (100) qui est prévu pour recevoir, à une fréquence d'horloge de programme, un flux (152) comprenant des blocs de données (158) et des estampilles de fréquence d'horloge de programme (160) qui indiquent une base de temps de référence pour un traitement dudit flux,
une horloge de référence (128) qui est prévue pour générer un signal d'horloge de référence,
**caractérisé par** :
un dispositif (118) qui est prévu pour traiter les blocs de données du flux transféré par ledit dispositif de traitement informatique (100) à une vitesse de traitement définie par le signal d'horloge de référence, et pour occasionner des événements qui indiquent la vitesse de traitement réelle dudit dispositif ; et
un circuit d'horodatage (102) qui est prévu pour détecter les événements qui indiquent la vitesse de traitement réelle, et pour enregistrer des estampilles temporelles pour les événements qui sont basées sur le signal d'horloge de référence, par un circuit d'horodatage (102) afin de déterminer (220) la vitesse de traitement réelle dudit dispositif et d'ajuster la vitesse de traitement dudit dispositif en se basant sur ladite vitesse de traitement réelle et ladite estampille de fréquence d'horloge de programme.

2. Système selon la revendication 1, dans lequel le circuit d'horodatage (102) détecte les événements qui indiquent la vitesse de traitement réelle en se basant sur des types d'événements qui sont programmés dans le circuit d'horodatage (102).

3. Système selon la revendication 1, comprenant en outre un processeur (104) qui est prévu pour demander au circuit d'horodatage (102) les estampilles temporelles pour les événements qui indiquent la vitesse de traitement réelle.

4. Système selon la revendication 3, dans lequel le processeur (104) ajuste la vitesse de traitement en se basant sur les estampilles temporelles pour les événements et les estampilles de fréquence d'horloge de programme du flux (152).

5. Système selon la revendication 3, dans lequel le processeur (104) ajuste une fréquence du signal d'horloge de référence en se basant sur les estampilles temporelles pour les événements et les estampilles de fréquence d'horloge de programme (160) du flux (152).

6. Système selon la revendication 3, dans lequel le processeur (104) ré échantillonne les blocs de données (158) en se basant sur les estampilles temporelles pour les événements et les estampilles de fréquence d'horloge de programme (160) du flux (152).

7. Système selon la revendication 3, dans lequel le circuit d'horodatage (102) enregistre des estampilles temporelles d'événements détectés et fournit au processeur (104) une estampille temporelle enregistrée pour un événement détecté en réponse à une demande émise par le processeur (104) d'une estampille de temps à partir du circuit d'horodatage (102).

8. Système selon la revendication 3, dans lequel le circuit d'horodatage (102) enregistre des estampilles temporelles d'événements détectés et fournit au processeur (104) une estampille temporelle enregistrée d'un événement détecté en réponse à la fourniture par le processeur (104) au circuit d'horodatage (102) d'un identifiant d'événement pour l'événement détecté.

9. Système selon la revendication 1, dans lequel le circuit d'horodatage (102) enregistre une estampille temporelle pour un événement détecté en réponse à la détermination du fait que l'événement détecté est un type d'événement qui doit être estampillé temporellement.

10. Système selon la revendication 9, dans lequel le circuit d'horodatage (102) ignore un événement détecté sans enregistrer une estampille temporelle pour l'événement détecté en réponse à la détermination du fait que l'événement détecté n'est pas un type d'événement qui doit être estampillé temporellement.

11. Système selon la revendication 3, comprenant en outre un jeu de puces (114) qui comprend le circuit d'horodatage (102), et qui couple le processeur (104) à une interface réseau (120) et au dispositif (118).

12. Système selon la revendication 1, comprenant en outre un arbitre (126) qui comprend le circuit d'horodatage (102), et qui arbitre des demandes pour une ressource partagée, dans lequel le circuit d'horodatage enregistre des estampilles temporelles pour des signaux d'arbitrage détectés d'un type d'événement.

13. Système selon la revendication 1, comprenant en outre un contrôleur d'interruption (127) qui comprend le circuit d'horodatage (102) et qui traite des interruptions reçues en provenance du dispositif, dans lequel le circuit d'horodatage enregistre des estampilles temporelles pour des signaux d'interruption détectés d'un type d'événement.

14. Procédé comprenant les étapes consistant à :
recevoir (202), par un dispositif de traitement informatique (100), à une fréquence d'horloge de programme, un flux comprenant des blocs de données et des estampilles de fréquence d'horloge de programme qui indiquent une base de temps de référence pour un traitement dudit flux ;
générer un signal d'horloge de référence,
**caractérisé par** les étapes consistant à :
traiter (206), par un dispositif (118), les blocs de données du flux transféré par ledit dispositif de traitement informatique (100) à une vitesse de traitement définie par le signal d'horloge de référence,
détecter (210) des événements occasionnés par ledit dispositif, les événements indiquant la vitesse de traitement réelle ; et
estampiller temporellement les événements qui indiquent la vitesse de traitement réelle, et enregistrer (212) les estampilles temporelles pour les événements par un circuit d'horodatage (102) afin de déterminer (220) la vitesse de traitement réelle dudit dispositif et d'ajuster la vitesse de traitement dudit dispositif en se basant sur ladite vitesse de traitement réelle et ladite estampille de fréquence d'horloge de programme.

15. Procédé selon la revendication 14, dans lequel une détection des événements qui indiquent la vitesse de traitement est réalisée par un circuit d'horodatage en se basant sur des types d'événements qui sont programmés dans le circuit d'horodatage.

16. Procédé selon la revendication 15, comprenant en outre l'étape consistant à demander (214) au circuit d'horodatage les estampilles temporelles pour les événements qui indiquent la vitesse de traitement réelle.

17. Procédé selon la revendication 14, comprenant en outre l'étape consistant à ajuster (220) la vitesse de traitement en se basant sur les estampilles temporelles pour les événements et les estampilles de fréquence d'horloge de programme du flux.

18. Procédé selon la revendication 14, comprenant en outre l'étape consistant à ajuster une fréquence du signal d'horloge de référence en se basant sur les estampilles temporelles pour les événements et les estampilles de fréquence d'horloge de programme du flux.

19. Procédé selon la revendication 14, comprenant en outre l'étape consistant à ré échantillonner les blocs de données en se basant sur les estampilles temporelles pour les événements et les estampilles de fréquence d'horloge de programme du flux.

20. Procédé selon la revendication 16, comprenant en outre l'étape consistant à fournir (216) une estampille temporelle enregistrée pour un événement détecté en réponse à une demande pour une estampille temporelle.

21. Procédé selon la revendication 16, comprenant en outre l'étape consistant à fournir une estampille temporelle enregistrée d'un événement détecté en réponse à un identifiant d'événement fourni pour l'événement détecté.

22. Procédé selon la revendication 15, dans lequel une estampille temporelle est enregistrée pour un événement détecté en réponse à la détermination du fait que l'événement détecté est d'un type d'événement qui doit être estampillé temporellement.

23. Support lisible par une machine comprenant une pluralité d'instructions qui, s'ils sont exécutées sur une plate-forme de traitement informatique, provoquent l'exécution du procédé selon la revendication 14 par la plate-forme de traitement informatique.

24. Support lisible par une machine selon la revendication 23, dans lequel une détection des événements qui indiquent la vitesse de traitement réelle est réalisée par un circuit d'horodatage en se basant sur des types d'événements qui sont programmés dans le circuit d'horodatage.

25. Support lisible par une machine selon la revendication 24, comprenant en outre l'opération consistant à demander (214) au circuit d'horodatage les estampilles temporelles pour les événements qui indiquent la vitesse de traitement réelle.

26. Support lisible par une machine selon la revendication 23, comprenant en outre l'ajustage (220) de la vitesse de traitement en se basant sur les estampilles temporelles pour les événements et les estampilles de fréquence d'horloge de programme du flux.

27. Support lisible par une machine selon la revendication 23, comprenant en outre l'ajustage d'une fréquence du signal d'horloge de référence en se basant sur les estampilles temporelles pour les événements et les estampilles de fréquence d'horloge de programme du flux.

28. Support lisible par une machine selon la revendication 23, comprenant en outre le ré échantillonnage des blocs de données en se basant sur les estampilles temporelles pour les événements et les estampilles de fréquence d'horloge de programme du flux.

29. Support lisible par une machine selon la revendication 25, comprenant en outre la fourniture (216) d'une estampille temporelle enregistrée pour un événement détecté en réponse à une demande pour une estampille temporelle.

30. Support lisible par une machine selon la revendication 25, comprenant en outre l'opération consistant la fourniture d'une estampille temporelle enregistrée d'un événement détecté en réponse à un identifiant d'événement fourni pour l'événement détecté.

31. Support lisible par une machine selon la revendication 24, dans lequel une estampille temporelle est enregistrée pour un événement détecté en réponse à la détermination du fait que l'événement détecté est d'un type d'événement qui doit être estampillé temporellement.
